# EUROPÄISCHE PATENTSCHRIFT

(11) **EP 0 793 748 B1**
(45) Veröffentlichungstag und Bekanntmachung des Hinweises auf die Patenterteilung: **02.09.1998**
(21) Anmeldenummer: 95940183.7
(22) Anmeldetag: 16.11.1995
(51) Int. Cl.: D21C 5/02

(54) **VERFAHREN ZUR ENTFERNUNG VON DRUCKFARBEN AUS BEDRUCKTEM ALTPAPIER**
METHOD OF REMOVING PRINTING INKS FROM PRINTED WASTEPAPER
PROCEDE PERMETTANT D'ELIMINER LES ENCRES D'IMPRIMERIE PRESENTES SUR DES PAPIERS DE RECUPERATION

(30) Priorität: 25.11.1994 DE 4442056
(43) Veröffentlichungstag der Anmeldung: 10.09.1997
(73) Patentinhaber: Henkel Kommanditgesellschaft auf Aktien, 40191 Düsseldorf (DE)
(72) Erfinder: LIPHARD, Maria, D-45279 Essen (DE); HORNFECK, Klaus, D-40822 Mettmann (DE); NELLESSEN, Bernhard, D-41564 Kaarst (DE)
(86) Internationale Anmeldenummer: EP9504502
(87) Internationale Veröffentlichungsnummer: WO9617123

(56) Entgegenhaltungen:
- EP-A- 0 372 267
- EP-A- 0 373 375
- WO-A-93/21376
- DE-A- 3 928 841

## Beschreibung

### Gebiet der Erfindung

Die Erfindung betrifft ein Verfahren zur Entfernung von Druckfarben aus bedrucktem Altpapier in Gegenwart von amino-und/oder ammoniumgruppenhaltigen Polymeren und/oder Copolymeren mit Zahlenmitteln der Molekulargewichte zwischen 2.000 und 1.000.000 und Cellulosederivaten sowie die Verwendung der amino- und/oder ammoniumgruppenhaltigen Polymere und Cellulosederivate zur Entfernung von Druckfarben aus bedrucktem Altpapier.

### Stand der Technik

Zur Herstellung von beispielsweise Zeitungsdruck- und Hygienepapieren werden heute in großen Mengen Altpapiere eingesetzt. Für diese Papiersorten sind Helligkeit und Farbe Qualitätsmerkmale. Um diese zu erreichen, müssen die Druckfarben aus den bedruckten Altpapieren entfernt werden. Üblicherweise geschieht dies mittels sogenannter Deinking-Verfahren. Diese Verfahren werden in technisch üblichen Anlagen zur Altpapier-Aufbereitung durchgeführt, die mit zusätzlichen Einrichtungen zur Abtrennung der abgelösten Druckfarbenteilchen versehen sind. Zwei wichtige Teilschritte sind dabei:
(1) Das Aufschlagen der Altpapiere. Unter Aufschlagen ist dabei der Prozeß der Zerfaserung der Altpapiere zu verstehen. Er kann z.B. in wäßrigem Medium durch Zuführung mechanischer Energie (Rühren) induziert werden. Die Zerfaserung wird begleitet von der Ablösung der Druckfarbenteilchen. Die Druckfarbenteilchen zerfallen dabei in sehr kleine Partikel mit einer Teilchengröße bon 0,1 bis 1000 µm und liegen in fein dispergierter Form vor. Beim Aufschlagen wird eine Papierstoff-Suspension in Form eines grauen Papierbreies erhalten.
(2) Die Entfernung der abgelösten Druckfarbenteilchen aus der Papierstoff-Suspension. Dieser Schritt des Deinking-Verfahrens kann durch Auswaschen oder Flotation erfolgen. (vergl. z.B. "Ullmanns Encyclopädie der Technischen Chemie", 4. Auflage, Band 17, Seite 570-571,(1979)).

Üblicherweise wird das Deinken von Altpapieren bei alkalischen pH-Werten in Gegenwart von Alkalihydroxyden, Alkalisilikaten, oxidativ-wirkenden Bleichmitteln und oberflächenaktiven Substanzen bei Temperaturen zwischen 30 und 50 °C durchgeführt. Als oberflächenaktive Substanzen werden meist anionische und/oder nichtionische Tenside eingesetzt, z.B. Seifen, ethoxylierte Fettalkohole und und/oder ethoxylierte Alkylphenole (vergl. z.B. "Wochenblatt für Papierfabrikation", 17, 646-649 (1985)).

Insbesondere die Entfernung von Druckfarben auf Wasserbasis unter den üblichen alkalischen Deinking-Bedingungen hat sich als problematisch erwiesen. Im Gegensatz zu den konventionellen Druckfarben auf Ölbasis können die Bindemittel und Dispergator-Verbindungen der Druckfarben auf Wasserbasis unter den genannten Bedingungen gelöst bzw. redispergiert werden. Der Druckfarbenverband löst sich auf und zerfällt in sehr kleine Teilchen. Diese Teilchen werden durch eine Adsorption der Dispergatoren auf der Oberfläche der Pigmente zusätzlich stabilisiert. Diese sehr kleinen Farbpartikel bleiben auf der Faser und können durch die üblichen Wasch- und Flotationsbedingungen nicht abgelöst, was zu einer sehr starken Vergrauung des aus den Rohstoffen hergestellten Papiers führt.

In ctp, Centre Technique du Papier, ist Research Forum on Recycling vom 29. - 31. Oktober 1991, wird berichtet, daß der Einsatz von Carboxymethylcellulose zwar die Ablagerung von Druckfarben reduzieren kann, aber zu keiner Verbesserung der Farbe führt.

Zusätzlich zu den erwähnten Druckfarben gelangen auch wasserlösliche bzw. kolloidal gelöste sowie feindispergierte Feststoffe in die Prozeßwässer der Papierfabrikation und reichern sich dort bei Kreislauf-Einengungen in unerwünschter Weise an. Bei diesen Feststoffen handelt es sich vor allem um Füllstoffe und Feinfasern.

Wegen der negativen Auswirkungen der Störstoffe ist bei geschlossenen Wasserkreisläufen und Kreislauf-Einengungen meist eine Wasserreinigung notwendig. Dabei werden üblicherweise Flockungs-, Fällungs-, Adsorptions- und Flotationsverfahren oder Kombinationen dieser Verfahren herangezogen (vergl. z.B. J. Schurz, Wochenblatt für Papierfabrikation 1990, 3, 109-118). Üblich in Wasch-Deinking-Anlagen ist z.B. die Mikroflotation, bei welcher die suspendierten Feststoffe sowie die gelösten und kolloidalen Stoffe geflockt und danach aus dem Wasser ausflotiert werden (vergl. z.B. K. Schnabel, Wochenblatt für Papierfabrikation, 1990, 6, 233-237).

Übliche Flockungsmittel bei der Aufbereitung von Prozeßwässern der Papierindustrie sind anorganische und organische Flockungsmittel wie Kalkmilch, Aluminium- oder Eisensalzlösungen, kationische Polymere wie Polyethylenimin, kationische Stärken, Polyamidoamin-Epichlorhydrin-Harze und Melaminformaldehydharze (vergl. die o.g. Artikel von W. Auhorn und J. Schurz). Ein vom Fachmann ganz bevorzugtes verwendetes Flockungsmittel ist Polydiallyldimethylammoniumchlorid (vergl. z.B. R. Nicke et al., Wochenblatt für Papierfabrikation 1992, 14, 559-564 sowie den o.g. Artikel von J. Schurz. Diese Verbindung, üblicherweise als Poly-DADMAC bezeichnet, ist ein lineares Molekül, das in jeder der sich wiederholenden Struktureinheiten eine positive Ladung am Stickstoffatom trägt. Nach außen hin wird diese positive Ladung durch ein negativ geladenes Chloridion neutralisiert. Insgesamt entsteht dadurch ein Polyelektrolyt mit sehr hoher Ladungsdichte.

### Beschreibung der Erfindung

Der vorliegenden Erfindung lag die Aufgabe zugrunde, ein Verfahren zur Entfernung von Druckfarben aus bedrucktem Altpapier zu entwickeln. Dabei sollte dieses Verfahren insbsondere den Weißgrad des erhaltenen Papiers verbessern und ggf. auch feindispergierte Feststoffe aus den Prozeßwässern entfernen, um möglichst die Verschmutzung des Prozesswassers möglichst gering zu halten.

Es wurde nun gefunden, daß eine Kombination von amino-und/oder ammoniumgruppenhaltigen Polymeren und/oder Copolymeren und Cellulose-Derivaten sich für die Aufbereitung von Kreislaufwässem und Abwässern der Papierfabrikation besonders gut eignet.

Gegenstand der vorliegenden Erfindung ist ein Verfahren zur Entfernung von Druckfarben aus bedrucktem Altpapier, worin man dem Prozeßwasser ein Additiv zudosiert und die ausgefallenen Feststoffe anschließend durch Flotation und/oder Filtration entfernt, wobei das Additiv
(1) ein oder mehrere amino- und/oder ammoniumgruppenhaltige Polymere und/oder Copolymere mit Zahlenmitteln der Molekulargewichte zwischen 2.000 und 1.000.000 und
(2) ein oder mehrere Cellulose-Derivate
enthält.

In Gegenwart einer Kombination aus amino- und/oder ammoniumgruppenhaltigen Polymeren und Cellulose-Derivaten lassen sich Druckfarben, beispielsweise Zeitungsrotationsfarben, Buchdruckfarben, Offsetdruckfarben, Illustrations-Tiefdruckfarben, Flexodruckfarben, Laserdruckfarben und/oder Verpackungs-Tiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die in Gegenwart der erfindungsgemäß verwendeten Kombination deinkten Altpapiere zeichnen sich durch hohe Weißgrade aus.

Vorzugsweise kommen mindestens teilweise wasserlösliche amino- und/oder ammoniumgruppenhaltige Polymere und/oder Copolymere mit Zahlenmitteln der Molekulargewichte zwischen 5.000 und 500.000, besonders bevorzugt solche mit Zahlenmitteln der Molekulargewichte zwischen 10.000 und 200.000 zum Einsatz.

*Mindestens teilweise wasserlöslich* bedeutet, daß die Polymeren und/oder Copolymeren beim Anwendungs-pH-Wert zu mehr als 0,01 Gew.-% in Wasser klar oder trübe löslich sind.

Der Begriff *mindestens teilweise wasserlösliche aminogruppenhaltige Polymere und/oder Copolymere* umfaßt auch Polymere mit Pyridingruppen, beispielsweise Polymere auf Basis von 2-Vinylpyridin und/oder 4-Vinylpyridin.

Eine für das erfindungsgemäße Verfahren bevorzugte Gruppe von Polymeren ist erhältlich durch
a) Polymerisation von aminogruppenhaltigen Monomeren der allgemeinen Formel (I) 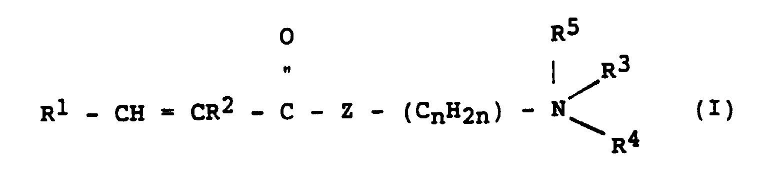 in der R¹ und R² jeweils ein Wasserstoffatom oder eine Methylgruppe, R³ und R⁴ jeweils ein Wasserstoffatom oder eine Alkylgruppe mit 1 bis 4 C-Atomen oder einen Piperazin-, Piperidin- oder Morpholin-Rest und R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säure-Anion oder ein Elektronenpaar ist, Z Sauerstoff oder NH bedeutet und n eine Zahl zwischen 2 und 5 ist,
oder durch
b) Copolymerisation von Monomeren der Formel (I) mit
   b1) monomeren, ungesättigter Säuren der allgemeinen Formel (II) 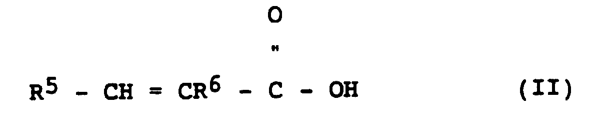 in der R⁵ und R⁶ jeweils ein Wasserstoffatom oder eine Methylgruppe bedeuten und/oder
   b2) monomeren, ungesättigten Carbonsäureestern der allgemeinen Formel (III) 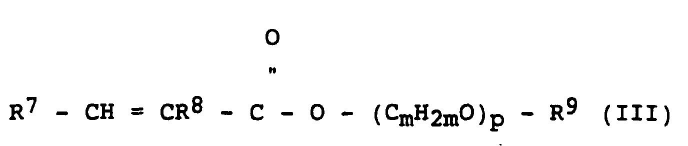 in der die Reste R⁷ und R⁸ jeweils ein Wasserstoffatom oder eine Methylgruppe und R⁹ eine gerad-oder verzweigtkettige Alkylgruppe mit 1 bis 22 C-Atomen, m eine Zahl zwischen 2 und 4 und p eine Zahl zwischen 0 und 18 bedeuten, mit der Maßgabe, daß im Falle p = 0 der Gehalt ungesättigter Carbonsäureester im Copolymer 90 Gew.-% nicht übersteigt und/oder
   b3) Acrylamiden und/oder Methacrylamiden, die an den Amidstickstoffatomen durch gerad- und/oder verzweigtkettige Alkylreste mit 1 bis 22 C-Atomen substituiert sein können und/oder
   b4) N-Vinylpyrrolidon,
   oder durch
c) Umsetzung von Polymeren, die Carboxylgruppen und/oder Estergruppen der allgemeinen Formel -COOR¹⁰, worin R¹⁰ eine Alkylgruppe mit 1 bis 8 C-Atomen bedeutet, und/oder eine Anhydridgruppe -CO-O-CO- enthalten, mit - bezogen auf die in diesen Polymeren enthaltenen Carboxyl-, Ester- und/oder latenten Carboxylgruppen -
   c1) 0 bis 1 Äquivalenten Aminoalkoholen der allgemeinen Formel (IV) 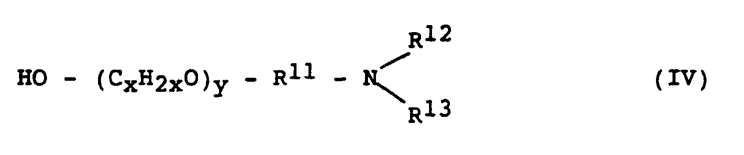 worin R¹¹ eine Alkylengruppe mit 1 bis 8 C-Atomen oder eine aromatische Gruppe, R¹² und R¹³ unabhängig voneinander Alkylgruppen mit 1 bis 4 C-Atomen oder eine aromatische Gruppe oder die Reste R¹² und R¹³ zusammen mit dem N-Atom eine Piperazin-, Piperidin- oder Morpholingruppe, x eine Zahl von 2 bis 4 und y eine Zahl von 0 bis 10 bedeuten
   c2) 0 bis 1 Äquivalenten Diaminen der allgemeinen Formel (V)

      NHR¹⁴ - R¹⁵ - NR¹⁶R¹⁷ (V)

      worin R¹⁵ eine Alkylengruppe mit 1 bis 8 C-Atomen oder eine aromatische Gruppe, R¹⁴ Wasserstoff oder eine Akylgruppe mit 1 bis 4 C-Atomen, R¹⁶ und R¹⁷ unabhängig voneinander Alkylgruppen mit 1 bis 4 C-Atomen oder R¹⁶ und R¹⁷ zusammen -CH=CH-N=CH- bedeuten
   c3) 0 bis 0,5 Äquivalenten Alkoholen der allgemeinen Formel (VI)

      HO - (CₐH₂ₐO)_{b}-R¹⁸ (VI)

      worin R¹⁸ eine Alkylgruppe mit 6 bis 22 C-Atomen oder eine aromatische Gruppe, a eine Zahhl von 2 bis 4 und b eine Zahl von 0 bis 30 bedeuten und
c4) 0 bis 0,5 Äquivalenten Aminen der allgemeinen Formel (VII)

   NHR¹⁹R²⁰ (VII)

   worin R¹⁹ Wasserstoff oder eine Alkylgruppe mit 1 bis 4 C-Atomen und R²⁰ eine Alkylgruppe mit 6 bis 22 C-Atomen oder eine aromatische Gruppe bedeuten,
   mit der Maßgabe, daß die Summe der Äquivalente der Komponenten c1) und c2) ungleich 0 ist.

Als aminogruppenhaltige Monomere der allgemeinen Formel I eignen sich insbesondere solche, in denen die Reste R¹ Wasserstoff, R² Wasserstoff oder Methyl, R³ und R⁴ jeweils Methyl oder Ethyl, R⁵ ein Elektronenpaar oder eine Alkylgruppe mit 1 bis 4 C-Atomen mit der Maßgabe, daß das Gegenion zur Ammoniumfunktion ein Halogen-Anion ist, bedeuten. Beispiele sind Dimethylaminoethylmethacrylat, Dimethylaminoethylacrylat, Dimethylaminopropylmethacrylamid, Dimethylaminoneopentylacrylat, Diethylaminoethylacrylat, Diethylaminoethylmethacrylat und/oder Methacrylamidopropyldimethylammoniumchlorid.

Als monomere, ungesättigte Säuren der allgemeinen Formel II werden vorzugsweise Acrylsäure und/oder Methacrylsäure eingesetzt.

Monomere, ungesättigte Carbonsäureester der allgemeinen Formel III, in denen der Rest R⁹ vorzugsweise eine gerad- oder verzweigtkettige Alkylgruppe mit 1 bis 8 C-Atomen bedeutet, sind etwa Ethylacrylat, Methylmethacrylat, Butylacrylat, Butylmethacrylat, Octylacrylat und/oder ein Anlagerungsprodukt von 3 Mol Ethylenoxid an Butylacrylat.

Zur Copolymerisation mit aminogruppenhaltigen Monomeren der allgemeinen Formel I eignen sich ferner Acrylamid, Methacrylamid, N-Ethylacrylamid und/oder tert.-Butylacrylamid.

Die Polymerisation oder Copolymerisation der aminogruppenhaltigen Monomeren der allgemeinen Formel I wird nach an sich bekannten Polymerisationsverfahren in wäßrigen Medien, die gewünschtenfalls mit Wasser mischbare Lösungsmittel wie Alkohole - z.B. Isopropanol - enthalten, durchgeführt. Als Starter wird dabei eine radikalbildende Substanz, beispielsweise Kalium- oder Ammoniumperoxodisulfat, tert.-Butylhydroperoxid, Azobis(isobutyronitril) in geringen Mengen zugegeben. Die Polymerisation oder Copolymerisation der aminogruppenhaltigen Monomeren der allgemeinen Formel I kann beispielsweise in der Weise erfolgen, daß die Monomeren I und gegebenenfalls Monomere der Gruppen b1) bis b4) gleichzeitig in Wasser, das den Starter enthält, getropft werden. Die Polymerisationstemperatur ist an sich nicht kritisch und kann in weiten Bereichen schwanken. In Abhängigkeit vom eingesetzten Starter können Temperaturen zwischen 60 und 100 °C optimal sein. Es werden wäßrige Polymeren- und/oder Copolymerenlösungen mit Polymerengehalten beispielsweise zwischen 10 und 60 Gew.-% erhalten.

Sofern die erfindunsgemäß geeigneten amino- und/oder ammoniumgruppenhaltigen Polymere und/oder Copolymere auf dem Wege der Veresterung bzw. Amidierung carboxyl-, ester-und/oder anhydridgruppenhaltiger Polymere mit Aminoalkoholen, Diaminen bzw. Aminen hergestellt werden, gilt folgendes:

Die carboxyl-, ester- und/oder anhydridgruppenhaltigen Polymeren lassen sich nach bekannten Polymerisationsverfahren in organischen Lösungsmitteln wie Hexan, Octan, Toluol, Xylol und/oder Ketonen herstellen. Als Monomere eignen sich beispielsweise Acrylsäure, Methacrylsäure, Crotonsäure, C₁₋₈-Al-kylester der vorgenannten Säuren, Arylester der vorgenannten Säuren, Maleinsäureanhydrid, Maleinsäure, Fumarsäure, Mono-C₁₋₈-Alkylester der vorgenannten Säuren, Di-C₁₋₈-Alkylester der vorgenannten Säuren sowie die entsprechenden Arylester. Die Alkylgruppe der Alkoholreste in den Estern kann dabei linear, verzweigtkettig oder cyclisch sein. Es kann ein Monomer oder ein Gemich aus Monomeren eingesetzt werden. Acrylsäure, Methacrylsäure, Acrylsäureester und/oder Methacrylsäureester werden als Monomere bevorzugt. Als weitere Monomere können Styrol, Alkylstyrole, 4-Vinylpyridin, N-Vinylpyrrolidon, Acrylnitril, Acrylamid, Methacrylamid, Vinylchlorid und/oder Vinylidenchlorid eingesetzt werden. Die Polymerisationen werden in Gegenwart radikalbildender Substanzen wie oben beschrieben durchgeführt.

Die Umsetzung der carboxyl-, ester - und/oder anhydridgruppenhaltigen Polymeren mit Aminoalkoholen und/oder Diaminen und gegebenenfalls Alkoholen und/oder Aminen, werden mit oder ohne organische Lösungsmittel, vorzugsweise in Gegenwart von Katalysatoren wie Schwefelsäure, p-Toluolsulfonsäure, Dibutylzinndilaurat, Zinn und/oder Alkalialkoholaten bei Temperaturen zwischen 100 und 230 °C durchgeführt. Das während der Veresterung und/oder Amidierung gebildete Wasser und/oder die gebildeten Alkohole werden destillativ entfernt. Als organische Lösungsmittel eignen sich beispielsweise aliphatische und/oder aromatische Kohlenwasserstoffe mit Siedepunkten oberhalb 100 °C.

Als Aminoalkohole c1) der allgemeinen Formel IV eignen sich beispielsweise 2-Dimethylaminoethanol, 2-Diethylaminoethanol, 3-Dimethylamino-2,2-dimethyl-1-propanol, 4-(Dimethylamino)-1-butanol, 6-(Dimethylamino)-1-hexanol, 2-[(2-Dimethylamino)-ethoxy]ethanol, 2-Dibutylaminoethanol, 3-Dimethylamino-1-pro-panol, 3-Diethylamino-1-propanol, 4-Dimethylaminophenol, 3-Diethylaminophenol, N-Hydroxyethyl-N-methylanilin, N-Hydro-xyethyl-N-ethylanilin, und/oder 4-(2-Hydroxyethyl)morpholin.

Beispiele für Diamine c2) der allgemeinen Formel V sind N,N-Dimethylaminopropylamin, N,N-Diethylaminopropylamin, N,N-Diethylaminoethylamin, 1-Diethylamino-4-aminopentan, N,N-Dime-thyl-p-phenylendiamin, N,N-Diethyl-p-phenylendiamin und/oder 1-(3-Aminopropyl)imidazol.

Die Umsetzungen von carboxyl-, ester- und/oder anhydridgruppenhaltigen Polymeren mit Aminoalkoholen und/oder Diaminen können in Gegenwart von Alkoholen c3) der allgemeinen Formel VI und/oder Aminen c4) der allgemeinen Formel VII durchgeführt werden. Die Alkylgruppen, die in den Alkoholen und/oder Aminen enthalten sind, können linear, verzweigtkettig und/oder cyclisch sein. Beispiele für Alkohole der allgemeinen Formel VI sind cyclohexanol, 2-Ethylhexanol, Octanol, Decanol, Dodecanol, Tetradecanol, Hexadecanol, Octadecanol, Docosanol, ein Anlagerungsprodukt von 12 Mol Ethylenoxid an Talgalkohol sowie Benzylalkohol. Beispiele für Amine der allgemeinen Formel VII sind Hexylamin, 2-Ethylhexylamin, Octylamin, Decylamin, Dodecylamin, Tetradecylamin, Hexadecylamin, Octadecylamin, Docosylamin, Kokosamin sowie Talgamin.

Eine weitere für das erfindungsgemäße Verfahren besonders bevorzugte Polymerengruppe sind Polyethylenimine und/oder ethyleniminhaltige Copolymere. Diese können gewünschtenfalls zusammen mit weiteren mindestens teilweise wasserlöslichen amino- und/oder ammoniumgruppenhaltigen Polymeren und/oder Copolymeren mit Zahlenmitteln der Molekulargewichte zwischen 2.000 und 500.000 eingesetzt werden.

Zum Deinken von Altpapieren sind ferner Polymere und/oder Copolymere auf der Basis von 2-Vinylpyridin, 4-Vinylpyridin und/oder 1-Vinylimidazol, beispielsweise Poly-4-vinylpyridin, Copolymere aus 1-Vinylimidazol und N-Vinylpyrrolidon mit Vinylimidazolgehalten zwischen 10 und 90 Gew.-%, gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2.000 und 500.000 besonders geeignet. Die Herstellung dieser Polymeren und/oder Copolymeren wird nach an sich bekanntern Polymerisationsverfahren beispielsweise in Substanz in Gegenwart radikalbildender Substanzen durchgeführt (Ullmanns Encyclopädie der technischen Chemie, 4. Auflage, Band 23, Seiten 611 - 614, Verlag Chemie Weinheim 1983).

Primäre, sekundäre, tertiäre und/oder quaternierte aminogruppenhaltige Polysaccharide und/oder Heteropolysaccharide und/oder deren Derivate, die gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2.000 und 500.000 eingesetzt werden können, sind eine weitere besonders bevorzugte Polymerengruppe für das erfindungsgemäße Deinking-Verfahren. Mindestens teilweise wasserlösliche primäre, sekundäre, tertiäre und/oder quaternierte aminogruppenhaltige Cellulosen, Hydroxyethylcellulosen, Stärken, Chitosan und/oder Guar sind Beispiele für primäre, sekundäre, tertiäre und/oder quaternierte aminogruppenhaltige Polysaccharide und/oder Heteropolysaccharide. Die Einführung tertiärer und/oder quaternierter Aminogruppen in aminogruppenfreie Polysaccharide und/oder Heteropolysaccharide erfolgt in an sich bekannter Weise, indem Polysaccharide und/oder Heteropolysaccharide mit tertiären Aminen, die einen Glycidylrest enthalten, und/oder mit Ammoniumverbindungen umgesetzt werden (US 3 472 840). Dimethylglycidylamin und 3-Chlor-2-hydroxypropyltrimethylammoniumchlorid sind Beispiele für tertiäre Amine und Ammoniumverbindungen.

Wasserverdünnbare Druckfarben lassen sich weiterhin besonders gut in Gegenwart von Proteinen, gegebenenfalls in Kombination mit weiteren mindestens teilweise wasserlöslichen amino-und/oder ammoniumgruppenhaltigen Polymeren und/oder Copolymeren mit Zahlenmitteln der Molekulargewichte zwischen 2.000 und 500.000 aus Altpapieren entfernen.

In einer bevorzugten Ausführungsform der vorliegenden Erfindung werden die genannten Polymere in einer Menge von 0,05 bis 1 Gew.-% Aktivsubstanz - bezogen auf eingesetztes Papier - eingesetzt.

Als Cellulose-Derivate, die zur Verwendung im erfindungsgemäßen Verfahren geeignet sind, sind insbesondere die Celluloseether zu nennen, wie z.B. Carboxymethylcellulose, Methylcellulose, Hydroxyalkylcellulose und Mischether, wie Methylhydroxyethylcellulose, Methylhydroxypropylcellulose, Methylcarboxymethylcellulose und deren Gemische, wobei Carboxymethylcellulose (Na-Salz), Methylcellulose und Methylhydroxyethylcellulose bevorzugt sind. Die Cellulose-Derivate werden bevorzugt in Mengen von 0,01 bis 2,5 Gew.-%, vorzugsweise 0,02 bis 1 Gew.-%, Aktivsubstanz - jeweils bezogen auf eingesetztes Papier - eingesetzt.

In vielen Fällen kann das Ausmaß der Entfernung von Druckfarben weiter erhöht werden, wenn im erfindungsgemäßen Verfahren die eingesetzten Komponenten in Kombination mit Flotationssammlern und/oder anorganischen Adsorptions- oder Flockungsmitteln eingesetzt werden.

Beispiele für Flotationsammler sind C₁₀₋₂₂-Fettsäuren sowie deren Alkali- bzw. Erdalkalisalze, alkoxylierte C₆_₂₂-Alkyl-alkohole oder alkoxylierte Alkylphenole, weitere kationische Polymeren, wie z. B. Polydimethylaminoethylmethacrylat und/oder Copolymeren, beschrieben beispielsweise in DE 38 39 479. Ganz besonders eignen sich dabei die genannten Fettsäuren sowie Fettalkoholalkoxylate mit hohem Anteil an Alkylenoxid, insbesondere Ethylenoxid. Beispiele für Flockungsmittel sind Kalkmilch, Aluminium- oder Eisensalzlösungen. Diese Komponenten können in einer Menge von 0,05 bis 1 Gew.-%, bezogen auf den lufttrockenen Papierstoff, eingesetzt werden.

Die Druckfarben lassen sich aus Altpapieren beispielsweise nach folgendem Verfahren entfernen: In einem Stofflöser werden bedruckte Altpapiere bei einer Stoffdichte beispielsweise zwischen 0,5 und 5 Gew.-% in wäßriger Lösung, die typischerweise 0 bis 1,5 Gew.-% Wasserstoffperoxid (100 %ig) 0 bis 2,5 Gew.-% Natriumhydroxyd (99 gew.-%ig), 0 bis 4,0 Gew.-% Natronwasserglas mit einem Feststoffgehalt von 35 Gew.-%, 0,02 bis 2 Gew.-% der oben definierten amino- und/oder ammoniumgruppenhaltigen Polymere und 0,01 bis 1,5 Gew.-% Cellulosederivate und 0 bis 1 Gew.-% der oben genannten fakultativen Bestandteile - alle Gew.-% Angaben beziehen sich auf lufttrockenes Altpapier - enthält, bei Temperaturen zwischen 20 und 60 °C zerkleinert. Nach einer Verweilzeit - typischerweise - zwischen 60 und 120 Minuten bei Temperaturen zwischen 20 und 60 °C werden die Papierstoff-Suspensionen in weiteres Wasser eingerührt oder mit weiterem Wasser versetzt, so daß 0,6 bis 1,6 gew.-%ige Papierstoff-Suspensionen erhalten werden. Anschließend werden die abgelösten Druckfarbenteilchen in an sich bekannter Weise durch Auswaschen oder Flotation aus den Papierstoff-Suspensionen ausgeschieden. Vorzugsweise wird in an sich bekannter Weise, beispielsweise in einer Denver-Flotationszelle (Labormaßstab) flotiert.

Sofern wasserbasierte Flexodruckfarben aus Altpapier entfernt werden sollen, empfiehlt es sich, das Verfahren dahingehend zu modifizieren, das Cellulosederivat bereits im Pulper bei einer Faserstoffkonzentration von etwa 4 Gew.-% zuzusetzen und das oben definierte amino- und/oder ammoniumgruppenhaltige Polymere unmittelbar vor der Flotation zuzugeben.

Durch den erfindungsgemäßen Einsatz von Cellulosederivat in Kombination mit amino- und/oder ammoniumgruppenhaltigem Polymer lassen sich Druckfarben sowohl aus dem Altpapier als auch aus dem Kreislaufwasser leichter entfernen. Die erfindungsgemäß zu verwendenden Verbindungen können aber auch zur separaten Reinigung von Papierkreislaufwässern, d.h. von Abwässern eingesetzt werden, die noch gewisse Mengen an Druckfarben enthalten. In diesen Fällen werden nach Zusatz von 0,5 bis 300 mg der Komponenten pro Liter Kreislaufwasser die Druckfarbenteilchen beispielsweise durch Filtration oder Flotation ausgeschieden.

Die folgenden Beispiele dienen der Erläuterung der Erfindung. Sie sind nicht einschränkend zu verstehen.

### Beispiele

**1. Druckfarbenentfernung aus alkalischem Medium**
   **1.1 Aufschlagen**
      Eine wäßrige Aufschlämmung von 17,5 g lufttrockenem, geschnetzeltem Altpapier (50 % Stern, 15 % Rheinische Post, 15 % Express, 20 % Flexo 1 6/90) mit einer Stoffdichte von 4 Gew.-% wurde in einem Rührgefäß vorgelegt. Nachdem nacheinander
      a) 2,0 Gew.-% Natronwasserglas mit einem Feststoffgehalt von 35 Gew.-% (37 bis 40 °Bé),
      b) 1,0 Gew.-% Natriumhydroxyd (99 gew.-%ig)
      c) 0,7 Gew.-% Wasserstoffperoxid (100 %ig) und
      d) 0,2 Gew.-% eines Cellulosederivates (vergl. Tabelle 1)

      zu dieser Aufschlämmung zugegeben worden waren - alle Gew.-% Angaben bezogen auf lufttrockenen Papierstoff -, wurden die aufgeschlämmten Papierschnitzel 10 Minuten bei 45 °C mit einer Dissolver-Scheibe (Fa. Pendraulik, Labormischer 34), zerkleinert. Man ließ den so erhaltenen Papierbrei 105 Minuten bei 45 °C stehen.
   **1.2 Druckfarben-Flotation (Deinking)**
      Der gemäß 1.1 erhaltene Papierbrei wurde mit Wasser einer Wasserhärte von 16° dH auf 1 Gew.-% Stoffdichte verdünnt. Anschließend wurden 0,2 Gew.-% - bezogen auf das eingesetzte Papier - eines amino- und/oder ammoniumgruppenhaltigen Polymers (vergleiche Tabelle 1) in Form einer wäßrigen Lösung zugegeben. Der Papierbrei wurde 12 Minuten bei 45 °C in einer Denver-Laborflotationszelle bei 1000 Umdrehungen pro Minute flotiert. Nach der Flotation wurde der erhaltene Papierbrei auf einer Filternutsche von Wasser getrennt und zwischen 2 Filterpapieren auf einer Fototrockenpresse zu einem Blatt geformt und bei 100 °C 90 Minuten getrocknet.
**2. Versuchsergebnisse**
   Einzelheiten der unter Nr. 1 beschriebenen Versuche sind in Tabelle 1 zusammengefaßt. Aus Tabelle 1 wird deutlich, daß man bei dem erfindungsgemäßen Verfahren im Hinblick auf den Weißgrad des Faserstoffes sowie die Farbe des Kreislaufwassers (gemessen als Transmission) ausgezeichnete Ergebnisse erhält.

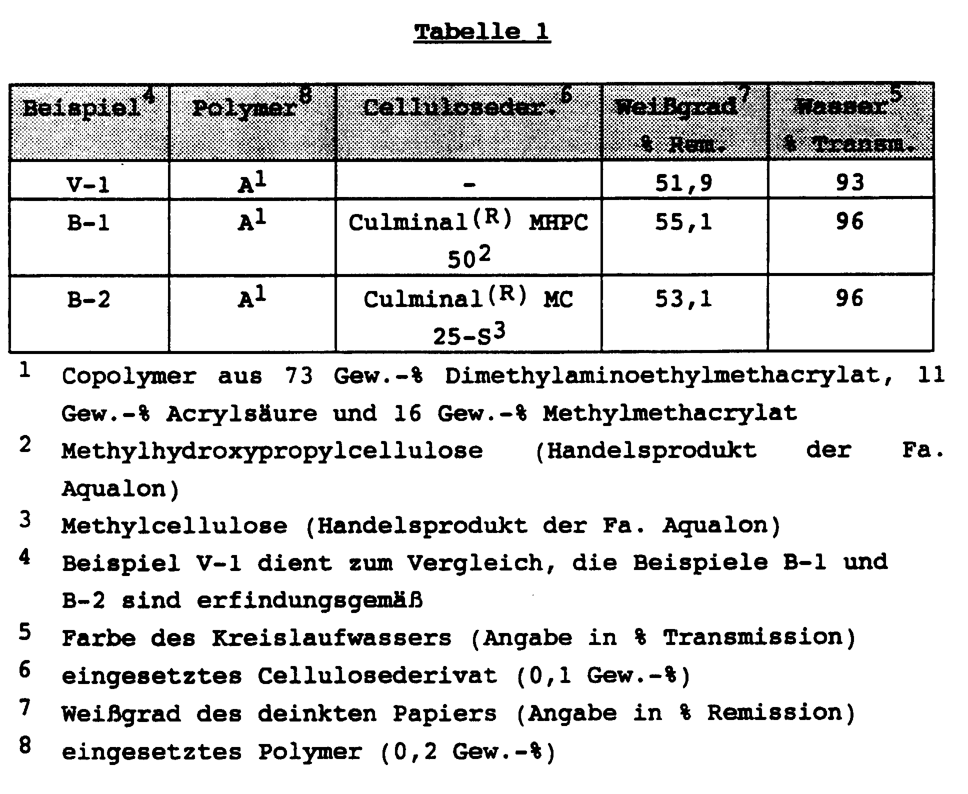

## Patentansprüche

1. Verfahren zur Entfernung von Druckfarben aus bedrucktem Altpapier, worin man dem Prozeßwasser ein Additiv zudosiert und die ausgefallenen Feststoffe anschließend durch Flotation und/oder Filtration entfernt, dadurch gekennzeichnet, daß das Additiv
(1) ein oder mehrere amino- und/oder ammoniumgruppenhaltige Polymere und/oder Copolymere mit Zahlenmitteln der Molekulargewichte zwischen 2.000 und 1.000.000 und
(2) ein oder mehrere Cellulose-Derivate
enthält.

2. Verfahren nach Anspruch 1, wobei die amino- und/oder ammoniumgruppenhaltigen Polymeren und/oder Copolymeren Zahlenmittel der Molekulargewichte zwischen 5.000 und 500.000, vorzugsweise zwischen 10.000 und 200.000, aufweisen.

3. Verfahren nach Anspruch 1 oder 2, wobei man solche amino- und ammoniumgruppenhaltigen Polymere einsetzt, die erhältlich sind durch
a) Polymerisation von aminogruppenhaltigen Monomeren der allgemeinen Formel I 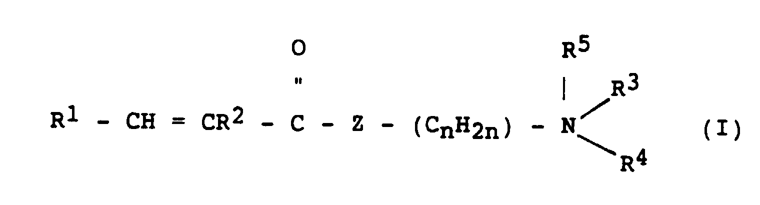 in der R¹ und R² jeweils ein Wasserstoffatom oder eine Methylgruppe, R³ und R⁴ jeweils ein Wasserstoffatom oder eine Alkylgruppe mit 1 bis 4 C-Atomen oder einen Piperazin-, Piperidin- oder Morpholin-Rest und R⁵ einen gerad- oder verzweigtkettigen Alkylrest mit 1 bis 22 C-Atomen mit der Maßgabe, daß das Gegenion zur Ammoniumfunktion ein Halogen-, Sulfat-, Phosphat-, Borat- oder organisches Säure-Anion oder ein Elektronenpaar ist, Z Sauerstoff oder NH bedeutet und n eine Zahl zwischen 2 und 5 ist,
oder durch
b) Copolymerisation von Monomeren der Formel I mit
b1) monomeren, ungesättigter Säuren der allgemeinen Formel II 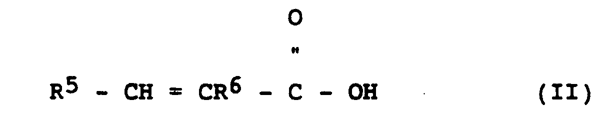 in der R⁵ und R⁶ jeweils ein Wasserstoffatom oder eine Methylgruppe bedeuten und/oder
b2) monomeren, ungesättigten Carbonsäureestern der allgemeinen Formel III 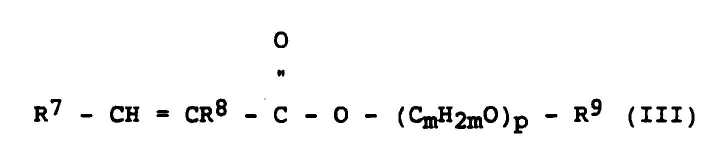 in der die Reste R⁷ und R⁸ jeweils ein Wasserstoffatom oder eine Methylgruppe und R⁹ eine gerad- oder verzweigtkettige Alkylgruppe mit 1 bis 22 C-Atomen, m eine Zahl zwischen 2 und 4 und p eine Zahl zwischen 0 und 18 bedeuten, mit der Maßgabe, daß im Falle p = 0 der Gehalt ungesättigter Carbonsäureester im Copolymer 90 Gew.-% nicht übersteigt und/oder
b3) Acrylamiden und/oder Methacrylamiden, die an den Amidstickstoffatomen durch gerad- und/oder verzweigtkettige Alkylreste mit 1 bis 22 C-Atomen substituiert sein können und/oder
b4) N-Vinylpyrrolidon,
oder durch
c) Umsetzung von Polymeren, die Carboxylgruppen und/oder Estergruppen der allgemeinen Formel -COOR¹⁰, worin R¹⁰ eine Alkylgruppe mit 1 bis 8 C-Atomen bedeutet, und/oder eine Anhydridgruppe -CO-O-CO- enthalten, mit - bezogen auf die in diesen Polymeren enthaltenen Carboxyl-, Ester- und/oder latenten Carboxylgruppen -
c1) 0 bis 1 Äquivalenten Aminoalkoholen der allgemeinen Formel IV 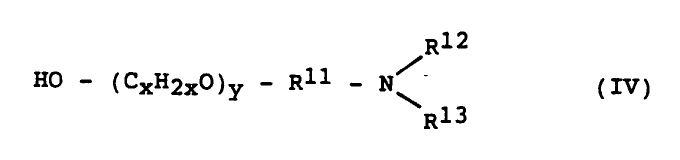 worin R¹¹ eine Alkylengruppe mit 1 bis 8 C-Atomen oder eine aromatische Gruppe, R¹² und R¹³ unabhängig voneinander Alkylgruppen mit 1 bis 4 C-Atomen oder eine aromatische Gruppe oder die Reste R¹² und R¹³ zusammen mit dem N-Atom eine Piperazin-, Piperidin- oder Morpholingruppe, x eine Zahl von 2 bis 4 und y eine Zahl von 0 bis 10 bedeuten
c2) 0 bis 1 Äquivalenten Diaminen der allgemeinen Formel V
NHR¹⁴ - R¹⁵ - NR¹⁶R¹⁷ (V)
worin R¹⁵ eine Alkylengruppe mit 1 bis 8 C-Atomen oder eine aromatische Gruppe, R¹⁴ Wasserstoff oder eine Alkylgruppe mit 1 bis 4 C-Atomen, R¹⁶ und R¹⁷ unabhängig voneinander Alkylgruppen mit 1 bis 4 C-Atomen oder R¹⁶ und R¹⁷ zusammen -CH=CH-N=CH- bedeuten
c3) 0 bis 0,5 Äquivalenten Alkoholen der allgemeinen Formel VI
HO - (CₐH₂ₐO)_{b}-R¹⁸ (VI)
worin R¹⁸ eine Alkylgruppe mit 6 bis 22 C-Atomen oder eine aromatische Gruppe, a eine Zahl von 2 bis 4 und b eine Zahl von 0 bis 30 bedeuten und
c4) 0 bis 0,5 Äquivalenten Aminen der allgemeinen Formel (VII)
NHR¹⁹R²⁰ (VII)
worin R¹⁹ Wasserstoff oder eine Alkylgruppe mit 1 bis 4 C-Atomen und R²⁰ eine Alkylgruppe mit 6 bis 22 C-Atomen oder eine aromatische Gruppe bedeuten,
mit der Maßgabe, daß die Summe der Äquivalente der Komponenten c1) und c2) ungleich 0 ist.

4. Verfahren nach einem der Ansprüche 1 oder 2, wobei man amino- und/oder ammoniumhaltige Polymere und/oder Copolymere Polyethylenimine und/oder ethyleniminhaltige Copolymere, gegebenenfalls in Kombination mit weiteren mindestens teilweise wasserlöslichen amino und/oder ammoniumgruppenhaltigen Polymeren und/oder Copolymeren mit Zahlenmitteln der Molekulargewichte zwischen 2.000 und 1.000.000 einsetzt.

5. Verfahren nach einem der Ansprüche 1 oder 2, wobei man als amino- und/oder ammoniumgruppenhaltige Polymere und/oder Copolymere Polymere auf Basis von 2-Vinylpyridin, 4-Vinylpyridin und/oder 1-Vinylimidazol, gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2.000 und 1.000.000 einsetzt.

6. Verfahren nach einem der Ansprüche 1 oder 2, wobei man als amino- und/oder ammoniumgruppenhaltige Polymere und/oder Copolymere primäre, sekundäre, tertiäre und/oder quaternierte Ammoniumgruppen enthaltene Polysaccharide und/oder Heteropolysaccharide, gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2.000 und 1.000.000 einsetzt.

7. Verfahren nach einem der Ansprüche 1 oder 2, wobei man als amino- und/oder ammoniumgruppenhaltige Polymere und/oder Copolymere Proteine, gegebenenfalls in Kombination mit weiteren mindestens teilweise wasserlöslichen amino- und/oder ammoniumgruppenhaltigen Polymeren und/oder Copolymeren mit Zahlenmitteln der Molekulargewichte zwischen 2.000 und 1.000.000 einsetzt.

8. Verfahren nach Anspruch 1 bis 7, wobei man Cellulose-Derivate Celluloseether wie Carboxymethylcellulose, Methylcellulose, Hydroxyalkylcellulose und Mischether wie Methylhydroxyethylcellulose, Methylhydroxypropylcellulose, Methylcarboxymethylcellulose und deren Gemische einsetzt.

9. Verfahren nach einem der Ansprüche 1 bis 8, wobei man die Cellulose-Derivate in einer Menge von 0,01 bis 2,5 Gew.-% Aktivsubstanz, bezogen auf luftgetrocknetes, eingesetztes Papier, einsetzt.

10. Verfahren nach einem der Ansprüche 1 bis 9, wobei man die amino- und/oder ammoniumgruppenhaltigen Polymere und/oder Copolymere in einer Menge von 0,02 bis 5 Gew.-% Aktivsubstanz, bezogen auf luftgetrocknetes, eingesetztes Papier, einsetzt.

11. Verfahren nach einem der Ansprüche 1 bis 10, wobei man die Cellulosederivate beim Aufschlagen und das amino-und/oder ammoniumgruppenhaltige Polymer und/oder Copolymer unmittelbar vor der Flotation zugibt.

12. Verfahren nach einem der Ansprüche 1 bis 11, wobei man die Komponenten 1) und 2) in Kombination mit einem Flotationssammler und/oder einem anorganischen Flockungsmittel einsetzt.

13. Verfahren nach einem der Ansprüche 1 bis 12, wobei man die ausgeflockten Feststoffe durch Flotation entfernt.

## Claims

1. A process for the removal of printing inks from printed wastepaper, in which an additive is added to the process water and the solids precipitated are subsequently removed by flotation and/or filtration, characterized in that the additive contains
(1) one or more polymers and/or copolymers containing amino groups and/or ammonium groups with number average molecular weights in the range from 2,000 to 1,000,000 and
(2) one or more cellulose derivatives.

2. A process as claimed in claim 1, characterized in that the polymers and/or copolymers containing amino groups and/or ammonium groups have number average molecular weights of 5,000 to 500,000 and preferably in the range from 10,000 to 200,000.

3. A process as claimed in claim 1 or 2, characterized in that polymers containing amino groups and ammonium groups obtainable by
a) polymerization of monomers containing amino groups corresponding to general formula (I): 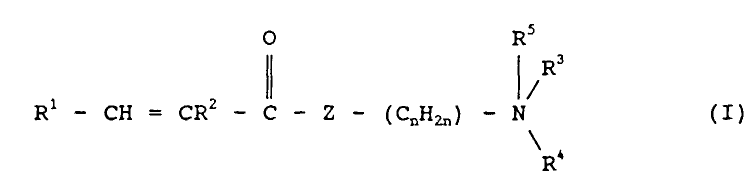 in which R¹ and R² each represent a hydrogen atom or a methyl group, R³ and R⁴ each represent a hydrogen atom or an alkyl group containing 1 to 4 carbon atoms or a piperazine, piperidine or morpholine group and R⁵ is a linear or branched alkyl radical containing 1 to 22 carbon atoms, with the proviso that the counterion to the ammonium function is a halogen, sulfate, phosphate, borate or organic acid anion or an electron pair, Z is oxygen or NH and n is a number of 2 to 5,
or by
b) copolymerization of monomers corresponding to formula (I) with
b1) monomeric unsaturated acids corresponding to general formula (II): 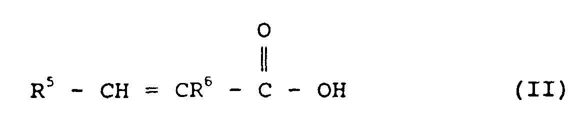 in which R⁵ and R⁶ each represent a hydrogen atom or a methyl group and/or
b2) monomeric unsaturated carboxylic acid esters corresponding to general formula (III): 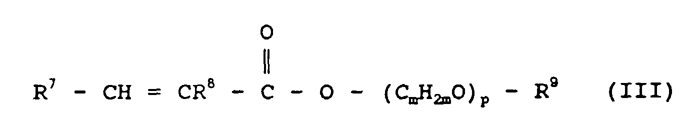 in which R⁷ and R⁸ each represent a hydrogen atom or a methyl group and R⁹ is a linear or branched alkyl group containing 1 to 22 carbon atoms, m is a number of 2 to 4 and p is a number of 0 to 18, with the proviso that, where p = 0, the content of unsaturated carboxylic acid esters in the copolymer does not exceed 90% by weight, and/or
b3) acrylamides and/or methacrylamides which may be substituted at the amide nitrogen atoms by linear and/or branched alkyl radicals containing 1 to 22 carbon atoms and/or
b4) N-vinyl pyrrolidone,
or by
c) reaction of polymers containing carboxyl groups and/ or ester groups which correspond to the general formula -COOR¹⁰, where R¹⁰ is an alkyl group containing 1 to 8 carbon atoms, and/or an anhydride group -CO-O-CO with - based on the carboxyl, ester and/or latent carboxyl groups present in these polymers -
c1) 0 to 1 equivalent of aminoalcohols corresponding to general formula (IV): 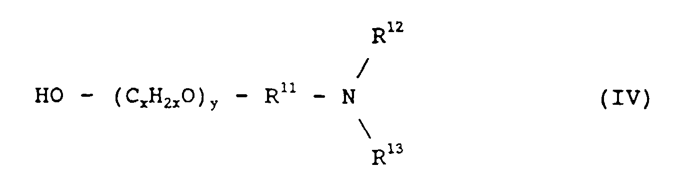 in which R¹¹ is an alkylene group containing 1 to 8 carbon atoms or an aromatic group, R¹² and R¹³ independently of one another represent alkyl groups containing 1 to 4 carbon atoms or an aromatic group and the substituents R¹² and R¹³ together with the N atom represent a piperazine, piperidine or morpholine group, x is a number of 2 to 4 and y is a number of 0 to 10,
C2) 0 to 1 equivalent of diamines corresponding to general formula (V):
NHR¹⁴ - R¹⁵ - NR¹⁶R¹⁷ (V)
in which R¹⁵ is an alkylene group containing 1 to 8 carbon atoms or an aromatic group, R¹⁴ is hydrogen or an alkyl group containing 1 to 4 carbon atoms, R¹⁶ and R¹⁷ independently of one another represent alkyl groups containing 1 to 4 carbon atoms or R¹⁶ and R¹⁷ together represent -CH=CH-N=CH-,
c3) 0 to 0.5 equivalent of alcohols corresponding to general formula (VI):
HO - (CₐH₂ₐO)_{b}-R¹⁸ (VI)
in which R¹⁸ is an alkyl group containing 6 to 22 carbon atoms or an aromatic group, a is a number of 2 to 4 and b is a number of 0 to 30 and
c4) 0 to 0.5 equivalent of amines corresponding to general formula (VII):
NHR¹⁹R²⁰ (VII)
in which R¹⁹ is hydrogen or an alkyl group containing 1 to 4 carbon atoms and R²⁰ is an alkyl group containing 6 to 22 carbon atoms or an aromatic group, with the proviso that the sum total of the equivalents of components c1) and c2) is not 0,
are used.

4. A process as claimed in claim 1 or 2, characterized in that polymers and/or copolymers containing amino groups and/or ammonium groups, polyethyleneimines and/or copolymers containing ethyleneimine are used, optionally in combination with other at least partly water-soluble polymers and/or copolymers containing amino groups and/or ammonium groups with number average molecular weights of 2,000 to 1,000,000.

5. A process as claimed in claims 1 or 2, characterized in that polymers based on 2-vinyl pyridine, 4-vinyl pyridine and/or 1-vinyl imidazole, optionally in combination with other at least partly water-soluble polymers and/or copolymers containing amino groups and/or ammonium groups with number average molecular weights of 2,000 to 1,000,000, are used as the polymers and/or copolymers containing amino groups and/or ammonium groups.

6. A process as claimed in claim 1 or 2, characterized in that primary, secondary, tertiary and/or quaternary polysaccharides and/or heteropolysaccharides containing ammonium groups, optionally in combination with other at least partly water-soluble polymers and/or copolymers containing amino groups and/or ammonium groups with number average molecular weights of 2,000 to 1,000,000, are used as the polymers and/or copolymers containing amino groups and/or ammonium groups.

7. A process as claimed in claim 1 or 2, characterized in that proteins, optionally in combination with other at least partly water-soluble polymers and/or copolymers containing amino groups and/or ammonium groups with number average molecular weights of 2,000 to 1,000,000, are used as the polymers and/or copolymers containing amino groups and/or ammonium groups.

8. A process as claimed in claims 1 to 7, characterized in that cellulose ethers, such as carboxymethyl cellulose, methyl cellulose, hydroxyalkyl cellulose, and mixed ethers, such as methyl hydroxyethyl cellulose, methyl hydroxypropyl cellulose, methyl carboxymethyl cellulose and mixtures thereof are used as the cellulose derivatives.

9. A process as claimed in any of claims 1 to 8, characterized in that the cellulose derivatives are used in a quantity of 0.01 to 2.5% by weight of active substance, based on air-dry paper used.

10. A process as claimed in any of claims 1 to 9, characterized in that the polymers and/or copolymers containing amino groups and/or ammonium groups are used in a quantity of 0.02 to 5% by weight of active substance, based on air-dry paper used.

11. A process as claimed in any of claims 1 to 10, characterized in that the cellulose derivatives are added during the refining step while the polymer and/or copolymer containing amino groups and/or ammonium groups is/are added immediately before flotation.

12. A process as claimed in any of claims 1 to 11, characterized in that components 1) and 2) are used in combination with a flotation collector and/or an inorganic flocculant.

13. A process as claimed in any of claims 1 to 12, characterized in that the solids separated by flocculation are removed by flotation.

## Revendications

1. Procédé d'élimination d'encres d'imprimerie de vieux papiers imprimés, où on ajoute à l'eau de procédé un additif et ensuite on élimine les solides précipités par flottation et/ou filtration,
caractérisé en ce que
l'additif contient :
A) un ou plusieurs polymères et/ou copolymères contenant des groupes ammonium et ou amino ayant des poids moléculaires moyens en nombre compris entre 2000 et 1 000 000 et,
B) un ou plusieurs dérivés de cellulose.

2. Procédé selon la revendication 1, où les polymères et/ou les copolymères contenant des groupes amino et/ou ammonium présentent des poids moléculaires moyens en nombre compris entre 5000 et 500 000, de préférence entre 10 000 et 200 000.

3. Procédé selon la revendication 1 ou 2, où on utilise les polymères contenant des groupes amino et ou ammonium qu'on obtient par :
a) polymérisation des monomères contenant des groupes amino de formule générale I 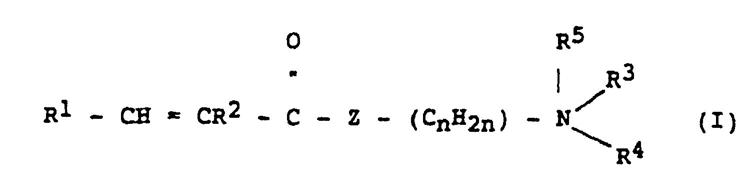 ou R¹ et R² représentent respectivement un atome d'hydrogène ou un groupe méthyle, R³ et R⁴ représentent respectivement un atome d'hydrogène ou un groupe alkyle avec 1 à 4 atomes de C ou un radical pipérazine, pipéridine ou morpholine et R⁵ est un radical alkyle linéaire ou ramifié avec 1 à 22 atomes de C à la condition que l'ion de signe opposé à celui de la fonction ammonium est un anion acide organique, halogénure, sulfate, phosphate ou borate ou une paire d'électrons, Z est l'oxygène ou NH et n est un nombre entre 2 et 5,
ou par :
b) copolymérisation de monomères de formule I avec
b1) des acides insaturés monomères de formule générale II 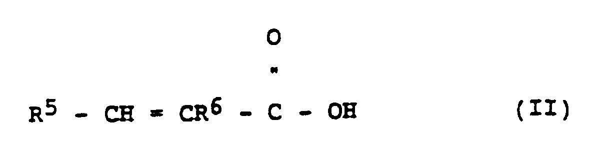 où R⁵ et R⁶ représentent respectivement un hydrogène ou un groupe méthyle et/ou
b2) des esters d'acide carboxylique insaturés monomères de formule générale III 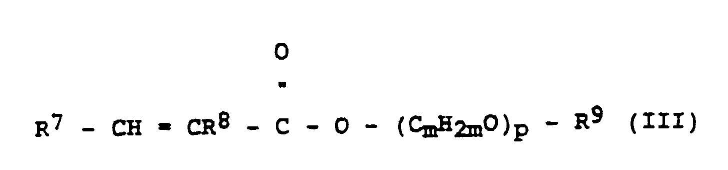 où les radicaux R⁷ et R⁸ représentent respectivement un atome d'hydrogène ou un groupe méthyle et R⁹ un groupe alkyle à chaîne droite ou ramifiée avec 1 à 22 atomes de C, m est un nombre compris entre 2 et 4 et p un nombre compris entre 0 et 18, à la condition que dans le cas où p = 0, la teneur en ester d'acide carboxylique insaturé dans le copolymère ne dépasse pas 90 % en poids et/ou
b3) des acrylamides et/ou méthacrylamides, qui peuvent être substitués sur l'atome d'azote amide par des radicaux alkyles à chaîne droite et/ou ramifiée avec 1 à 22 atomes de C et/ou,
b4) de la N-vinylpyrrolidone,
ou par
c) réaction de polymères, qui contiennent les groupes carboxyles et/ou des groupes esters de formule générale -COOR¹⁰, où R¹⁰ est un groupe alkyle avec 1 à 8 atomes de C, et/ou un groupe anhydride -CO-O-CO-, avec par rapport aux groupes contenus dans ces polymères, carboxyles, esters et/ou carboxyles latents,
c1) 0 à 1 équivalent d'aminoalcools de formule générale IV 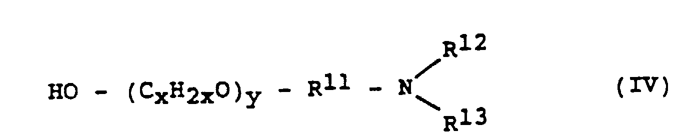 où R¹¹ est un groupe alkylène avec 1 à 8 atomes de C ou un groupe aromatique, R¹² et R¹³ représentent indépendamment l'un de l'autre des groupes alkyles avec 1 à 4 atomes de C ou un groupe aromatique ou les radicaux R¹² et R¹³ forment avec l'atome N un groupe pipérazine, pipéridine ou morpholine, x est un nombre de 2 à 4 et y un nombre de 0 à 10.
c2) 0 à 1 équivalent diamine de formule générale V
NHR¹⁴ - R¹⁵ - NR¹⁶R¹⁷ (V)
où R¹⁵ est un groupe alkylène avec 1 à 8 atomes de C ou un groupe aromatique, R¹⁴ est un hydrogène ou un groupe alkyle avec 1 à 4 atomes de C, R¹⁶ et R¹⁷ représentent indépendamment l'un de l'autre des groupes alkyles avec 1 à 4 atomes de C ou R¹⁶ et R¹⁷ représentent ensemble -CH=CH-N=CH-
c3) 0 à 0,5 équivalent alcool de formule générale VI
HO - (CₐH₂ₐO)_{b}-R¹⁸ (VI)
où R¹⁸ est un groupe alkyle avec 6 à 22 atomes de C ou un groupe aromatique, a un nombre de 2 à 4 et b un nombre de 0 à 30 et,
c4) 0 à 0,5 équivalent amine de formule générale VII
NHR¹⁹R²⁰ (VII)
où R¹⁹ est l'hydrogène ou un groupe alkyle avec 1 à 4 atomes de C et R²⁰ est un groupe alkyle avec 6 à 22 atomes de C ou un groupe aromatique, à la condition que la somme des équivalents des composants c1 et c2 soit différente de 0.

4. Procédé selon l'une des revendications 1 ou 2 où on utilise des polymères et/ou copolymères contenant des groupes amino et/ou ammonium, des polyéthylèneimine et/ou des copolymères contenant de l'éthylèneimine, le cas échéant en combinaison avec d'autres polymères et/ou copolymères contenant des groupes amino et/ou ammonium, au moins partiellement hydrosolubles ayant des poids moléculaires moyens en nombre compris entre 2000 et 1 000 000.

5. Procédé selon l'une des revendications 1 ou 2, où on utilise comme polymères et/ou copolymères contenant des groupes amino ou ammonium, des polymères à base de 2-vinylpyridine, 4-vinylpyridine et/ou 1-vinylimidazol, le cas échéant en combinaison avec d'autres polymères et/ou copolymères contenant des groupes amino et/ou ammonium au moins partiellement hydrosolubles ayant des poids moléculaires moyens en nombre compris entre 2000 et 1 000 000.

6. Procédé selon l'une des revendications 1 ou 2, où on utilise comme polymères et/ou copolymères contenant des groupes amino et/ou ammonium, des polysaccharides et/ou hétéropolysaccharides, le cas échéant en combinaison avec d'autres polymères et/ou copolymères contenant des groupes amino et/ou ammonium au moins partiellement hydrosolubles avec des poids moléculaires moyens en nombre compris entre 2000 et 1 000 000.

7. Procédé selon l'une des revendications 1 ou 2, où on utilise comme polymères et/ou copolymères contenant des groupes amino et/ou ammonium, des protéines, le cas échéant en combinaison avec d'autres polymères et/ou copolymères contenant des groupes amino et/ou ammonium au moins partiellement hydrosolubles ayant des poids moléculaires moyens en nombre compris entre 2000 et 1 000 000.

8. Procédé selon la revendication 1 à 7, où on utilise des dérivés de cellulose, des éthers de cellulose comme la carboxyméthylcellulose, la méthylcellulose, l'hydroxyalkyl-cellulose et des éthers mixtes comme la méthylhydroxy-éthylcellulose, la méthylhydroxypropylcellulose, la méthyl-carboxyméthylcellulose et leurs mélanges.

9. Procédé selon l'une des revendications 1 à 8, où on utilise les dérivés de cellulose en une quantité de 0,01 à 2,5 % en poids de substance active, par rapport au papier utilisé séché à l'air.

10. Procédé selon l'une des revendications 1 à 9, où on utilise les polymères et/ou copolymères contenant des groupes amine et/ou ammonium en une quantité de 0,02 à 5 % en poids de substance active, par rapport au papier utilisé séché à l'air.

11. Procédé selon l'une des revendications 1 à 10, où on ajoute les dérivés de cellulose lors du débitage et le polymère et/ou le copolymère contenant des groupes amino et/ou ammonium immédiatement avant la flottation.

12. Procédé selon l'une des revendications 1 à 11, où on utilise les composants 1) et 2) en combinaison avec un collecteur de flottation et/ou un agent floculant minéral.

13. Procédé selon l'une des revendications 1 à 12, où on élimine les solides floculés par flottation.
